# DEMANDE DE BREVET EUROPEEN

(11) **EP 0 992 377 A1**
(43) Date de publication de la demande: **12.04.2000**
(21) Numéro de dépôt: 99119816.9
(22) Date de dépôt: 07.10.1999
(51) Int. Cl.: B60H 1/02

(54) **Dispositif thermostatique de récupération de la chaleur des gaz d'échappement d'un véhicule**

(30) Priorité: 07.10.1998 FR 9812566
(71) Demandeur: VALEO THERMIQUE MOTEUR S.A., 78321 La Verrière (FR)
(72) Inventeur: Ap, Ngy Srun, 78420 Saint Rémy les Chevreuse (FR); Jouanny, Philippe, 78310 Maurepas (FR)

(57) **Abrégé**

La chaleur est récupérée au moyen d'un échangeur de chaleur (15) en contact thermique permanent avec le pot d'échappement (16). Deux vannes à trois voies (17, 19) permettent, soit d'inclure cet échangeur de chaleur dans une boucle de chauffage contenant un radiateur (10) pour le chauffage de l'habitacle, soit de le séparer de cette boucle et de le relier à une conduite (22) d'évacuation de vapeur.

## Description

L'invention concerne un dispositif pour le refroidissement du moteur thermique et le chauffage de l'habitacle d'un véhicule automobile, comprenant un premier échangeur de chaleur propre à contribuer à un transfert de chaleur d'un fluide caloporteur à l'atmosphère, un second échangeur de chaleur propre à contribuer à un transfert de chaleur du fluide caloporteur à l'habitacle, et des conduites de liaison permettant au fluide caloporteur de circuler dans le moteur et dans lesdits échangeurs.

Dans un tel dispositif, une partie de la chaleur recueillie par le fluide caloporteur dans le moteur sert au chauffage de l'habitacle, quand il est nécessaire, grâce au second échangeur de chaleur, la chaleur excédentaire étant évacuée à l'atmosphère au moyen du premier échangeur de chaleur.

L'amélioration du rendement thermique des moteurs à combustion interne, en particulier pour les petites cylindrées, conduit à la réduction des quantités de chaleur recueillies par le fluide caloporteur, celles-ci pouvant devenir insuffisantes pour assurer un chauffage satisfaisant de l'habitacle. Le chauffage est également insuffisant tant que le moteur n'a pas atteint sa température de fonctionnement normal.

Pour augmenter la puissance thermique disponible pour le chauffage, il est connu d'avoir recours à un troisième échangeur de chaleur propre à contribuer à un transfert de chaleur des gaz d'échappement du moteur au fluide caloporteur. Dans ce cas cependant, il n'est pas souhaitable que le fluide caloporteur en circulation soit en contact thermique permanent avec les gaz d'échappement, car son échauffement pourrait conduire à une capacité de refroidissement du moteur insuffisante dans certaines circonstances, notamment pour des températures extérieures élevées et/ou une forte charge du moteur. C'est pourquoi les dispositifs connus utilisant ce troisième échangeur prévoient dans le circuit des gaz d'échappement une conduite de dérivation permettant d'éviter cet échangeur, la circulation des gaz dans l'échangeur ou dans la conduite de dérivation étant commandée par une vanne thermostatique. Une telle vanne, qui doit fonctionner dans un environnement à haute température, est très coûteuse.

Le but de l'invention est d'obtenir le même résultat, à savoir un transfert de chaleur commandé des gaz d'échappement au fluide caloporteur, par des moyens moins coûteux.

L'invention vise notamment un dispositif pour le refroidissement du moteur thermique et le chauffage de l'habitacle d'un véhicule automobile, comprenant un premier échangeur de chaleur propre à contribuer à un transfert de chaleur d'un fluide caloporteur à l'atmosphère, un second échangeur de chaleur propre à contribuer à un transfert de chaleur du fluide caloporteur à l'habitacle, un troisième échangeur de chaleur propre à contribuer à un transfert de chaleur des gaz d'échappement du moteur au fluide caloporteur, et des conduites de liaison permettant au fluide caloporteur de circuler dans le moteur et dans lesdits échangeurs.

Selon l'invention, lesdites conduites comportent des moyens de commutation permettant également au fluide caloporteur de circuler dans le moteur et dans les premier et second échangeurs, sans passer par le troisième échangeur.

Des caractéristiques optionnelles de l'invention, complémentaires ou alternatives, sont énoncées ci-après:
- Les moyens de commutation sont propres à établir, soit une première configuration du dispositif dans laquelle le fluide caloporteur circule successivement dans les troisième et second échangeurs, soit une seconde configuration dans laquelle le fluide caloporteur ne circule pas dans le troisième échangeur, ce dernier étant relié au premier échangeur et/ou à un vase d'expansion par une conduite de décharge.
- Les moyens de commutation comprennent une première vanne reliant une conduite d'arrivée à l'entrée du troisième échangeur dans la première configuration, et à une conduite de dérivation évitant le troisième échangeur dans la seconde configuration, et une seconde vanne reliant la sortie du troisième échangeur à la jonction de la conduite de dérivation et d'une conduite de départ dans la première configuration, et à la conduite de décharge dans la seconde configuration.
- Les moyens de commutation comprennent une première vanne reliant une conduite de départ à la sortie du troisième échangeur dans la première configuration, et à une conduite de dérivation évitant le troisième échangeur dans la seconde configuration, et une seconde vanne reliant l'entrée du troisième échangeur à la jonction de la conduite de dérivation et d'une conduite d'arrivée dans la première configuration, et à la conduite de décharge dans la seconde configuration.
- Les première et seconde vannes sont des vannes à trois voies.
- Les moyens de commutation sont commandés en fonction de la température du fluide caloporteur en au moins un point du dispositif.
- Les conduites de liaison définissent deux boucles fermées pour la circulation du fluide caloporteur, à savoir une première boucle allant du moteur au moteur en passant par le premier échangeur, et une seconde boucle allant du moteur au moteur en passant successivement par les troisième et second échangeurs.

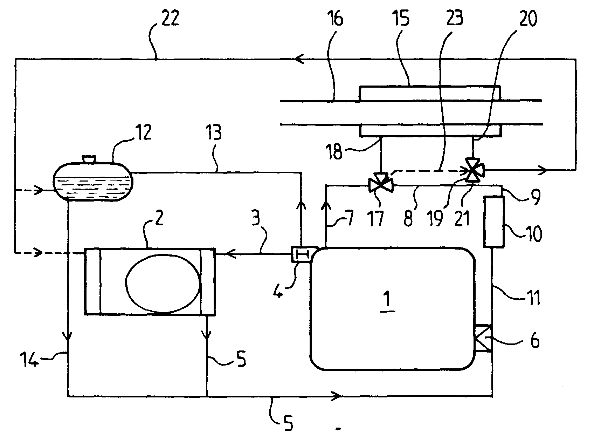

Les caractéristiques et avantages de l'invention seront exposés plus en détail dans la description ci-après, en se référant au dessin annexé.

La figure unique est un schéma fonctionnel d'un dispositif selon l'invention. On y voit le moteur thermique 1 d'un véhicule automobile qui est relié à un radiateur de refroidissement 2 par une conduite 3 munie d'un thermostat 4 permettant de faire circuler un fluide caloporteur du moteur vers le radiateur seulement lorsque la température du fluide dans le moteur dépasse un seuil. Une conduite 5 ramène le fluide du radiateur 2 à un pompe de circulation 6 qui le réintroduit dans le moteur. Trois autres conduites 7, 8 et 9 sont montées en série entre le moteur 1 et un radiateur 10 de chauffage de l'habitacle du véhicule, d'où une conduite 11 ramène le fluide à la pompe 6.

Un vase d'expansion 12 présente une entrée reliée au thermostat 4 par une conduite 13 et une sortie reliée à la conduite 5 par une conduite 14.

Le dispositif comprend également un échangeur de chaleur 15 en contact thermique avec une conduite 16 parcourue par les gaz d'échappement du moteur 1, par exemple en aval d'un dispositif de purification catalytique des gaz. Selon l'invention, une première vanne à trois voies 17 permet de relier la conduite 7, soit à la conduite 8, soit à une entrée 18 de fluide caloporteur de l'échangeur 15. En outre, une seconde vanne à trois voies 19 permet de relier la sortie de fluide 20 de l'échangeur 14, soit au point de jonction 21 entre les conduites 8 et 9, soit à une conduite de décharge 22 reliée par ailleurs au radiateur 2 et/ou au vase d'expansion 12. Ainsi, dans une première configuration établie par les vannes 17 et 21, le fluide provenant de la conduite 7 circule dans l'échangeur 15, puis rejoint la conduite 9 au point 21 pour parvenir au radiateur 10 sans circuler dans la conduite 8. La chaleur récupérée des gaz d'échappement contribue ainsi au chauffage de l'habitacle. Dans une seconde configuration du dispositif, le fluide provenant de la conduite 7 parvient au point 21 par la conduite de dérivation 8, sans circuler dans l'échangeur 15, la conduite 8 servant de conduite de court-circuit dudit échangeur. La capacité de refroidissement du moteur est ainsi augmentée.

Lorsque la circulation du fluide caloporteur dans l'échangeur 15 est interrompue dans la seconde configuration, le fluide contenu dans celui-ci est porté à ébullition par les gaz d'échappement qui continuent de circuler dans la conduite 16. La vapeur ainsi formée est évacuée par la conduite 22, jusqu'à ce qu'il ne reste plus de liquide dans l'échangeur. La capacité du vase d'expansion doit être suffisante pour accueillir ce volume de fluide. Un équilibre thermique s'établit alors entre les gaz d'échappement et la vapeur de fluide caloporteur remplissant l'échangeur 15. Lors du retour du dispositif dans la première configuration, l'échangeur 15 se remplit de nouveau de liquide entrant par l'entrée 18.

La vanne 17 peut être une vanne thermostatique commandée par la température du fluide qui la traverse. La vanne 17 peut alors commander à son tour la vanne 19, par des moyens par exemple mécaniques, pneumatiques ou électriques indiqués par une ligne 23. En variante, les deux vannes peuvent être commandées en fonction de la température du fluide en un autre point du circuit. Les vannes 17 et 19 peuvent être réunies dans un même module.

Il est possible d'inverser les positions des vannes 17 et 19 par rapport à celles décrites et représentées, la conduite de décharge 22 étant alors reliée à la vanne disposée à l'entrée de l'échangeur 15.

## Revendications

1. Dispositif pour le refroidissement du moteur thermique (1) et le chauffage de l'habitacle d'un véhicule automobile, comprenant un premier échangeur de chaleur (2) propre à contribuer à un transfert de chaleur d'un fluide caloporteur à l'atmosphère, un second échangeur de chaleur (10) propre à contribuer à un transfert de chaleur du fluide caloporteur à l'habitacle, un troisième échangeur de chaleur (15) propre à contribuer à un transfert de chaleur des gaz d'échappement du moteur au fluide caloporteur, et des conduites de liaison (3, 5, 7, 9, 11) permettant au fluide caloporteur de circuler dans le moteur et dans lesdits échangeurs, caractérisé en ce que lesdites conduites comportent des moyens de commutation (17, 19) permettant également au fluide caloporteur de circuler dans le moteur et dans les premier et second échangeurs, sans passer par le troisième échangeur.

2. Dispositif selon la revendication 1, caractérisé en ce que les moyens de commutation sont propres à établir, soit une première configuration du dispositif dans laquelle le fluide caloporteur circule successivement dans les troisième et second échangeurs (15, 10), soit une seconde configuration dans laquelle le fluide caloporteur ne circule pas dans le troisième échangeur, ce dernier étant relié au premier échangeur (2) et/ou à un vase-d'expansion (12) par une conduite de décharge (22).

3. Dispositif selon l'une des revendications 1 et 2, caractérisé en ce que les moyens de commutation comprennent une première vanne (17) reliant une conduite d'arrivée (7) à l'entrée (18) du troisième échangeur dans la première configuration, et à une conduite de dérivation (8) évitant le troisième échangeur dans la seconde configuration, et une seconde vanne (19) reliant la sortie (20) du troisième échangeur à la jonction (21) de la conduite de dérivation (8) et d'une conduite de départ (9) dans la première configuration, et à la conduite de décharge (22) dans la seconde configuration.

4. Dispositif selon l'une des revendications 1 et 2, caractérisé en ce que les moyens de commutation comprennent une première vanne reliant une conduite de départ à la sortie du troisième échangeur dans la première configuration, et à une conduite de dérivation évitant le troisième échangeur dans la seconde configuration, et une seconde vanne reliant l'entrée du troisième échangeur à la jonction de la conduite de dérivation et d'une conduite d'arrivée dans la première configuration, et à la conduite de décharge dans la seconde configuration.

5. Dispositif selon l'une des revendications 3 et 4, caractérisé en ce que les première et seconde vannes sont des vannes à trois voies (17, 19).

6. Dispositif selon l'une des revendications précédentes, caractérisé en ce que les moyens de commutation sont commandés en fonction de la température du fluide caloporteur en au moins un point du dispositif.

7. Dispositif selon l'une des revendications précédentes, caractérisé en ce que les conduites de liaison définissent deux boucles fermées pour la circulation du fluide caloporteur, à savoir une première boucle (3, 5) allant du moteur au moteur en passant par le premier échangeur (2), et une seconde boucle (7, 9, 11) allant du moteur au moteur en passant successivement par les troisième et second échangeurs (15, 10).
